(19)

**Europäisches Patentamt**
**European Patent Office**
**Office européen des brevets**

(11) **EP 4 571 681 A1**

(12) **EUROPEAN PATENT APPLICATION**

(43) Date of publication:
**18.06.2025 Bulletin 2025/25**

(21) Application number: **23307198.4**

(22) Date of filing: **13.12.2023**

(51) International Patent Classification (IPC):
*G06V 30/32* (2022.01)

(52) Cooperative Patent Classification (CPC):
**G06V 30/347; G06V 30/36**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **MyScript**
**44339 Nantes Cedex 3 (FR)**

(72) Inventors:
- **Manson, Gaël**
  **44339 NANTES (FR)**
- **Onis, Sébastien**
  **44339 NANTES (FR)**

(74) Representative: **RVDB Nantes**
**2, rue Crucy**
**CS 60515**
**44005 Nantes Cedex 1 (FR)**

(54) **MIXED INPUT-TYPE SEQUENCE RECOGNITION**

(57)    A system and a method for recognizing a mixed input-type sequence, wherein the mixed input-type sequence comprises at least a typeset symbol and at least a handwritten stroke, comprising: retrieving the at least one typeset symbol and the at least one handwritten stroke (ST4-ST6); extracting a set of typeset features (STF1-STF3) for the at least one retrieved typeset symbol; calculating a first set of geometric features (SGF1-SGF3) for the at least one retrieved typeset symbol and a second set of geometric features (SGF4-SGF6) for the least one retrieved handwritten stroke; generating a typeset embedding (TE1-TE3) from the extracted set of typeset features (STF1-STF3) and assigning a typeset embedding (TEc) for the at least one retrieved handwritten stroke; generating geometric embeddings (GE1-GE6) from the calculated sets of geometric features; combining the generated typeset embedding (TE1-TE3) of the at least one typeset symbol and the assigned typeset embedding (TEc) of the at least one handwritten stroke with the respective geometric embeddings; applying the combined embeddings (CE1-CE6) as an input sequence representing the mixed input-type sequence to a trained neural network (NNC); and generating a sequence (OS) of recognized symbols.

FIG.3G

## Description

### Field of the invention

The present invention relates to the field of recognizing handwritten text in touch-based user interfaces.

### Background

Handwriting recognition can be implemented in computing devices to input and process various types of handwritten input elements, hand-drawn or handwritten by a user, such as text content (e.g., alphanumeric characters) or non-text content (e.g., shapes, drawings). Once inputted on a computing device, the input elements are usually displayed as digital ink and undergo handwriting recognition to be manipulated as objects, for example text objects such as characters, words, lines or paragraphs or non-text objects such as primitives or shapes. The user handwriting input is typically interpreted using a real-time handwriting recognition system or method.

Strokes entered on or via the input surface are processed by the processor as digital ink. A user may enter a stroke with a finger or some instrument such as a pen or stylus suitable for use with the input surface. The user may also enter a stroke by making a gesture above the input surface if technology that senses motions in the vicinity of the input surface is being used, or with a peripheral device of the computing device, such as a mouse or joystick. A stroke is characterized by at least the stroke initiation location, the stroke termination location, and the path connecting the stroke initiation and termination locations. Because different users may naturally write the same object, e.g., a letter, a shape, a symbol, with slight variations, the HWR system accommodates a variety of ways in which each object may be entered whilst being recognized as the correct or intended object.

Various methods exist for handwriting recognition. A recent category of handwriting recognition methods operates by directly recognizing a sequence of characters or words from the full sequence of ink points corresponding to the user input.

Such method includes systems of a neural network sequence classifier such as a encoder-decoder structure that have been the state-of-the-art on classification problems defined as sequence to sequence wherein the input is a sequence (in our case, a temporal sequence of strokes or points coordinates describing the input ink) and the output of the system is also a sequence (in our case, the sequence of symbols meant by the mixed input-type sequence) as described in Sutskever I., Vinyals O., Le Q. V., "Sequence to Sequence Learning with Neural Networks". In Advances in Neural Information Processing Systems, 2014.

## Summary of the invention

In the context of a notetaking application, typeset input may be introduced mainly from previous ink recognition conversion, from copy/past of an external source or input made from a keyboard. Typeset refers to glyphs or symbols (typically a letter, a numerical digit, a punctuation mark, ...) used to represent a digital text. Editing existing typeset or completing it with new handwritten ink input leads to a mix of typeset and handwritten ink input. Interactive notetaking applications need to process this mixed input rather than just handwritten input ink.

The examples of the present invention that are described herein below provide computing devices, methods and corresponding computer programs for recognizing a mixed input-type sequence, wherein the mixed input-type sequence comprises at least a typeset symbol and at least a handwritten stroke.

According to a first aspect, the invention provides a method for recognizing a mixed input-type sequence, wherein the mixed input-type sequence comprises at least a typeset symbol and at least a handwritten stroke, comprising: retrieving S110 the at least one typeset symbol and the at least one handwritten stroke; extracting S140 a set of typeset features for the at least one retrieved typeset symbol; calculating S150 a first set of geometric features for the at least one retrieved typeset symbol and a second set of geometric features for the least one retrieved handwritten stroke; generating S160 a typeset embedding from the extracted set of typeset features and assigning a typeset embedding for the at least one retrieved handwritten stroke; generating S170 geometric embeddings from the calculated sets of geometric features; combining S180 the generated typeset embedding of the at least one typeset symbol and the assigned typeset embedding of the at least one handwritten stroke with the respective geometric embeddings; applying S190 the combined embeddings as an input sequence representing the mixed input-type sequence to a trained neural network; and generating S200 a sequence of recognized symbols.

According to a particular embodiment, the method comprises selecting S120 at least one typeset point for each retrieved typeset symbol, wherein the set of geometric features for each retrieved typeset symbol includes calculating features of the at least one selected typeset point.

According to a particular embodiment, the at least one typeset point is selected from a bounding box of the retrieved typeset symbol.

According to a particular embodiment, the method comprises sampling S130 at least one ink point for each retrieved handwritten stroke, wherein the set of geometric features for each retrieved handwritten stroke includes calculating features of the at least one sampled ink point.

According to a particular embodiment, the set of the geometric features includes calculating geometric relationships between the at least one sampled ink point of the handwritten stroke and the at least one typeset point of the typeset symbol.

According to a particular embodiment, the set of the typeset features includes an index of a fixed size dictionary.

According to a particular embodiment, the assigned typeset embedding is a constant.

According to a particular embodiment, the combining of the typeset embeddings with the respective geometric embeddings includes concatenating the typeset embeddings with the respective geometric embeddings.

According to a particular embodiment, the method comprises training the neural network for recognizing symbols of the fixed size dictionary from a training set of mixed input-type sequences.

Accordingly, the invention according to a second aspect also provides a computing device configured to recognize a mixed input-type sequence, wherein the mixed input-type sequence comprises at least a typeset symbol and at least a handwritten stroke, comprising: a sequence retrieving module 110 configured to retrieve the at least one typeset symbol and the at least one handwritten stroke; a typeset feature extracting module 140 configured to extract a set of typeset features for the at least one retrieved typeset symbol; a geometric feature calculating module 150 configured to calculate a first set of geometric features for the at least one retrieved typeset symbol and a second set of geometric features for the least one retrieved handwritten stroke; a typeset embedding generating module 160 configured to generate a typeset embedding from the extracted set of typeset features and assigning a typeset embedding for the at least one retrieved handwritten stroke; a geometric embedding generating module 170 configured to generate geometric embeddings from the calculated sets of geometric features; a geometric and typeset combining module 180 configured to combine the generated typeset embedding of the at least one typeset symbol and the assigned typeset embedding of the at least one handwritten stroke with the respective geometric embeddings; a symbol recognizing module 190 comprising a neural network trained to recognize symbols from an input sequence of combined embeddings.

According to a particular embodiment, the computing device comprises a typeset point selecting module 120 configured to select at least one typeset point for each retrieved typeset symbol; and an ink point sampling module 130 configured to sample at least one ink point for each retrieved handwritten stroke.

According to a particular embodiment, the computing device comprises an input surface (4) configured to receive handwritten input comprising a sequence of ink points of the handwritten stroke in a rectangular coordinate space.

According to a particular embodiment, the computing device comprises a processor (6); and memory (7) storing instructions that, when executed by the processor (6), configure the processor (7) to perform the method embodiment described above.

Accordingly, the invention according to a third aspect also provides a computer program including instructions that when executed by a processor (6) cause the processor to execute a method according to the method embodiments described above.

## Brief description of the drawings

The present system and method will be more fully understood from the following detailed description of the examples thereof, taken together with the drawings. In the drawings like reference numerals depict like elements. In the drawings:

Figure 1 shows a block diagram of a computing device in accordance with an embodiment of the present invention.

Figure 2 shows a flow diagram of an example of the present method for recognizing a mixed input-type sequence, wherein the mixed input-type sequence comprises a portion of typeset-input sequence and a portion of handwritten-input sequence of an electronic document.

Figure 3A shows an example of mixed input-type sequence onto an input area including a portion of typeset-input sequence and a portion of handwritten-input sequence of an electronic document displayed by the computing device.

Figure 3B shows the example of mixed input-type sequence as the three typeset symbols with associated typeset points, and the three strokes with associated ink points calculated by the computing device.

Figure 3C shows the example of mixed input-type sequence including the points of the segments of Figure 3B and the three bounding boxes of the three typeset symbols generated by the computing device.

Figure 3D illustrates some examples of the geometric features calculated for the first segment of the mixed input-type sequence MIS.

Figure 3E shows a representation of the sets of geometric features calculated by the computing device.

Figure 3F illustrates the extraction of the sets of typeset features from the known typeset symbols of the examples of FIG.3A to 3E.

Figure 3G shows the generation of geometric embeddings and the typeset embeddings from applying the sets of geometric features and the sets of typeset features to a first and second neural networks and final recognition of an output sequence of symbols.

**Detailed description**

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, and/or components are described at a relatively high-level, without detail, in order to avoid unnecessarily obscuring aspects of the present teachings.

The following description of the exemplary embodiments refers to the accompanying drawings. The following detailed description does not limit the invention. Instead, the scope of the invention is defined by the appended claims. In various embodiments as illustrated in the figures, a computing device, a corresponding method and a corresponding computer program are discussed.

The use of the term "text" in the present description is understood as encompassing all characters (e.g. alphanumeric characters or the like), and strings thereof, in any written language and any symbols used in written text.

The term "non-text" in the present description is understood as encompassing freeform handwritten or hand-drawn content (e.g. shapes, drawings, etc.) and image data. Non-text content defines graphic or geometric formations in linear or non-linear configurations, including containers, drawings, common shapes (e.g. arrows, blocks, etc.) or the like.

Furthermore, the examples shown in these drawings are in a left-to-right written language context, and therefore any reference to positions can be adapted for written languages having different directional formats.

The various technologies described herein generally relate to capture, processing and management of hand-drawn or handwritten content on portable and non-portable computing devices. The systems and methods described herein may utilize recognition of user's natural writing and drawing styles input to a computing device via an input surface, such as a touch sensitive screen (as discussed later). Whilst the various embodiments are described with respect to recognition of digital ink handwriting input using so-called online recognition techniques, it is understood that application is possible to other forms of input for recognition, such as offline recognition involving a remote device or server to perform recognition.

The terms "hand-drawing" and "handwriting" are used interchangeably herein to define the creating of digital contents by users through use of their hands (or fingers) or an input device (hand-held stylus or digital pen, mouse...) on or with an input surface. The term "hand" or the like is used herein to provide concise description of the input techniques.

The computing devices and methods described herein may utilize recognition of users' natural writing or drawing styles input to a computing device via an input interface, such as a touch sensitive screen, connected to, or of, the computing device or via an input device, such as a digital pen or mouse, connected to the computing device. Whilst the various examples are described with respect to recognition of handwriting input using so-called online recognition techniques, it is understood that application is possible to other forms of input for recognition, such as offline recognition in which images rather than digital ink are recognized.

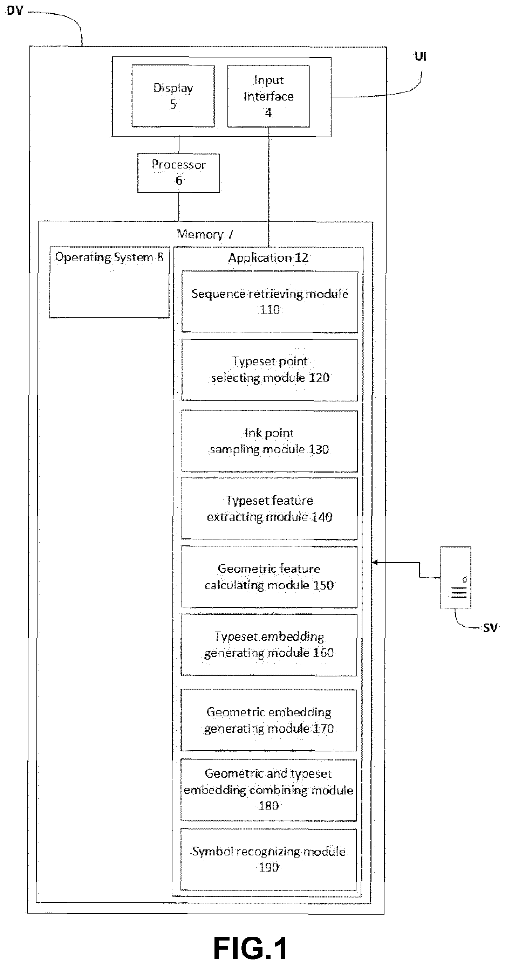

Figure 1 shows a block diagram of a system, comprising a computing device DV, for recognizing a mixed input-type sequence, wherein the mixed input-type sequence comprises a portion of typeset-input sequence and a portion of handwritten-input sequence.

The computing device (or digital device) DV may be a computer desktop, laptop computer, tablet computer, e-book reader, mobile phone, smartphone, wearable computer, digital watch, interactive whiteboard, global positioning system (GPS) unit, enterprise digital assistant (EDA), personal digital assistant (PDA), game console, or the like. The computing device DV includes components of at least one processing elements, some form of memory and input and output (I/O) devices. The components communicate with each other through inputs and outputs, such as connectors, lines, buses, links networks, or others known to the skilled person.

The illustrated example of the computing device DV has at least one display 5 for outputting data from the computing device such as images, text, and video. The display 5 may use LCD, plasma, LED, OLED, CRT, or any other appropriate technology that is or is not touch sensitive as known to those of ordinary skill in the art. At least some of the display 5 is co-located with at least one input area 4. The input area 4 may employ technology such as resistive, surface acoustic wave, capacitive, infrared grid, infrared acrylic projection, optical imaging, dispersive signal technology, acoustic pulse recognition, or any other appropriate technology as known to those of ordinary skill in the art to receive user input. The input area 4 may be bounded by a permanent or video-generated border that clearly identifies its boundaries. Instead of, or additional to, an on-board display, the computing device DV may have a projected display capability.

The computing device DV also includes a processor 6, which is a hardware device for executing software, particularly software stored in memory 7. The processor can be any custom made or commercially available general purpose processor, a central processing unit (CPU), commercially available microprocessors including a semiconductor based microprocessor (in the form of a microchip or chipset), microcontroller, digital signal processor (DSP), application specific integrated circuit (ASIC), field programmable gate array (FPGA) or other programmable logic device, discrete gate or transistor logic, discrete hardware components, state machine, or any combination thereof designed for executing software instructions known to those of ordinary skill in the art.

The memory 7 can include any one or a combination of volatile memory elements (e.g., random access memory (RAM, such as DRAM, SRAM, or SDRAM)) and nonvolatile memory elements (e.g., ROM, EPROM, flash PROM, EEPROM, hard drive, magnetic or optical tape, memory registers, CD-ROM, WORM, DVD, redundant array of inexpensive disks (RAID), another direct access storage device (DASD), or any other magnetic, resistive or phase-change nonvolatile memory). Moreover, the memory 7 may incorporate electronic, magnetic, optical, and/or other types of storage media. The memory 7 can have a distributed architecture where various components are situated remote from one another but can also be accessed by the processor 6. Further, the memory 7 may be remote from the device, such as at a server or cloud-based system, which is remotely accessible by the computing device DV. The memory 7 is coupled to the processor 6, so the processor 6 can read information from and write information to the memory 7. In the alternative, the memory 7 may be integral to the processor 6. In another example, the processor 6 and the memory 7 may both reside in a single ASIC or other integrated circuit.

The software in the memory 7 includes an operating system 8 and an application 12 in the form of a non- transitory computer readable medium having a computer readable program code embodied therein. The operating system 8 controls the execution of the application 12. The operating system 8 may be any proprietary operating system or a commercially or freely available operating system, such as WEBOS, WINDOWSO, MAC and IPHONE OS®, LINUX, and ANDROID. It is understood that other operating systems may also be utilized. Alternatively, the application 12 of the present computing device and method may be provided without use of an operating system.

The application 12 includes one or more processing elements related to detection, management and treatment of user input (discussed in detail later). The software may also include one or more other applications related to handwriting recognition (HWR), different functions, or both. Some examples of other applications include a text editor, telephone dialer, contacts directory, instant messaging facility, computer-aided design (CAD) program, email program, word processing program, web browser, and camera.

The application 12, with support and compliance capabilities, may be a source program, executable program (object code), script, application, or any other entity having a set of instructions to be performed. When a source program, the program needs to be translated via a compiler, assembler, interpreter, or the like, which may or may not be included within the memory, so as to operate properly in connection with the operating system. Furthermore, the HWR system with support and compliance capabilities can be written as (a) an object oriented programming language, which has classes of data and methods; (b) a procedure programming language, which has routines, subroutines, and/or functions, for example but not limited to C, C++, Pascal, Basic, Fortran, Cobol, Perl, Java, Objective C, Swift, and Ada; or (c) functional programing languages for example but no limited to Hope, Rex, Common Lisp, Scheme, Clojure, Racket, Erlang, OCaml, Haskell, Prolog, and F#.

Strokes entered on or via the input surface 4 are processed by the processor 6 as digital ink. A user may enter a stroke with a finger or some instrument such as a pen or stylus suitable for use with the input surface. The user may also enter a stroke by making a gesture above the input surface 4 if technology that senses motions in the vicinity of the input surface 4 is being used, or with a peripheral device of the computing device DV, such as a mouse or joystick. A stroke is characterized by at least the stroke initiation location, the stroke termination location, and the path connecting the stroke initiation and termination locations. Because different users may naturally write the same object, e.g., a letter, a shape, a symbol, with slight variations, the HWR system accommodates a variety of ways in which each object may be entered whilst being recognized as the correct or intended object.

The present computing device and method allow handwriting to be input virtually anywhere on the input area 4 of the computing device DV and this input is rendered as digital ink in the input position on the display area 5. The input area 4 may be provided as an unconstrained canvas that allows users to create graphical objects (text objects or non-text objects as further detailed below) anywhere without worrying about sizing or alignment. However, an alignment structure in the form of a line pattern background may be provided for guidance of user input and the alignment of digital and typeset ink objects. In any case, as users may input handwriting that is not closely aligned to the line pattern or may desire to ignore the line pattern and write in an unconstrained manner, such as diagonally or haphazardly, the HWR system is able to recognize this freely positioned handwriting. This 'free' input may be rendered as digital ink at the input position.

Various types of input elements can be processed by the computing device. More specifically, the computing device groups all the strokes into objects of one or more strokes. This grouping allows generating the strokes into coherent single objects, as the text objects (such as characters, words, lines or paragraphs) or the non-text objects (such as primitives and shapes, or drawings). Different strategies may be implemented to aggregate classification results for each stroke. The generation of objects may also be based on other predefined constraints such as stroke level constraints, spatial constraints, etc. to make it more comprehensible, robust and useful for subsequent recognition.

The present computing device and method further allow users to interact with the digital ink itself and provide meaningful guidance and results of that interaction. Interaction is assisted by the performance of segmentation of strokes in the recognition process and using information on this segmentation to allow management of an input or editing cursor that acts as a pointer for character level interactions and editing operations.

The HWR system includes stages (and corresponding modules) such as preprocessing, recognition and output. The preprocessing stage processes the digital ink to achieve greater accuracy and reducing processing time during the recognition stage. This preprocessing may include normalizing of the path connecting the stroke initiation and termination locations by applying size normalization and/or methods such as β-spline approximation to smooth the input. The preprocessed strokes are then passed to the recognition stage which processes the strokes to recognize the objects formed thereby. The recognized objects are then output to the display 5 as a digital ink or typeset ink versions of the handwritten input.

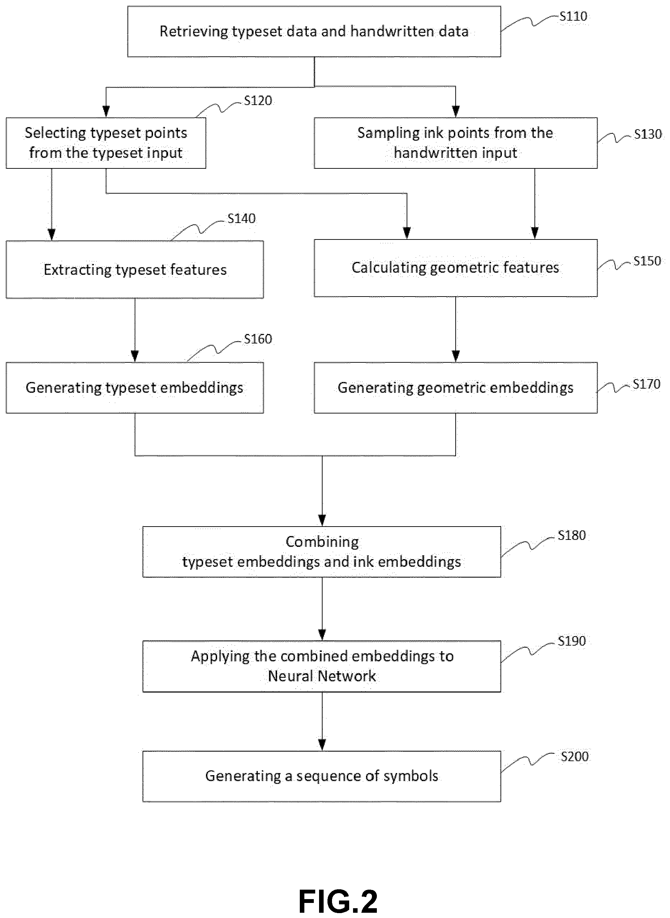

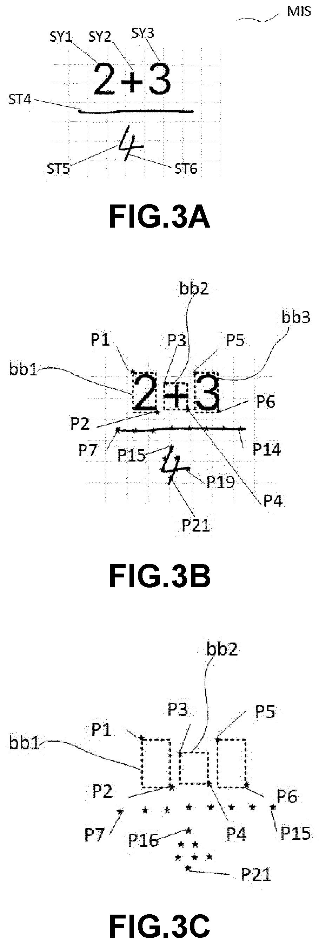

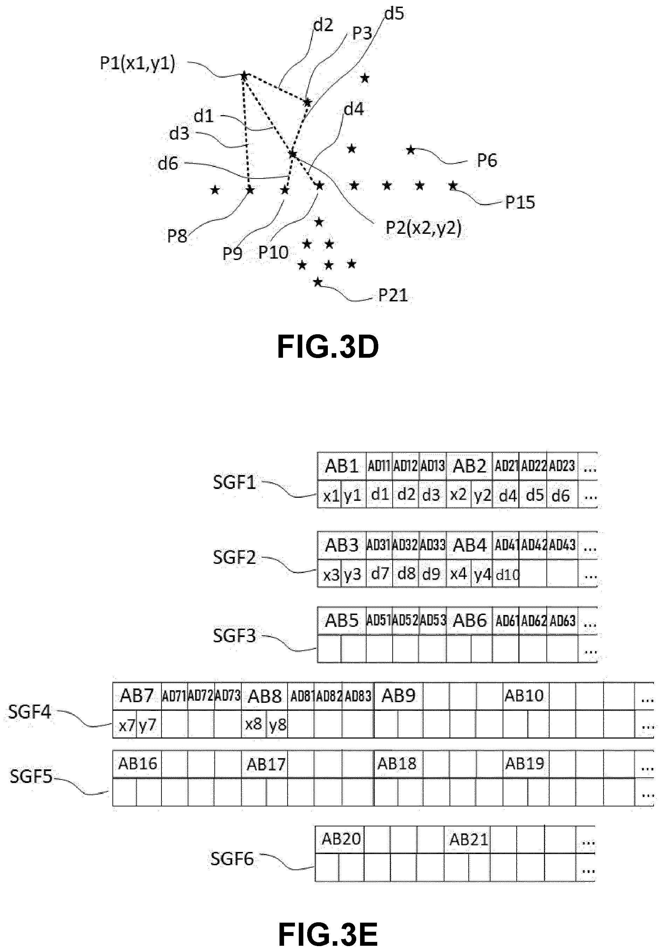

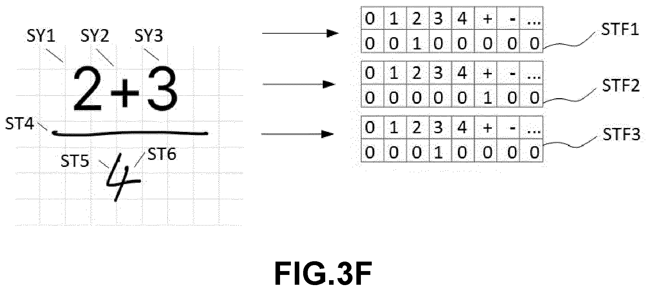

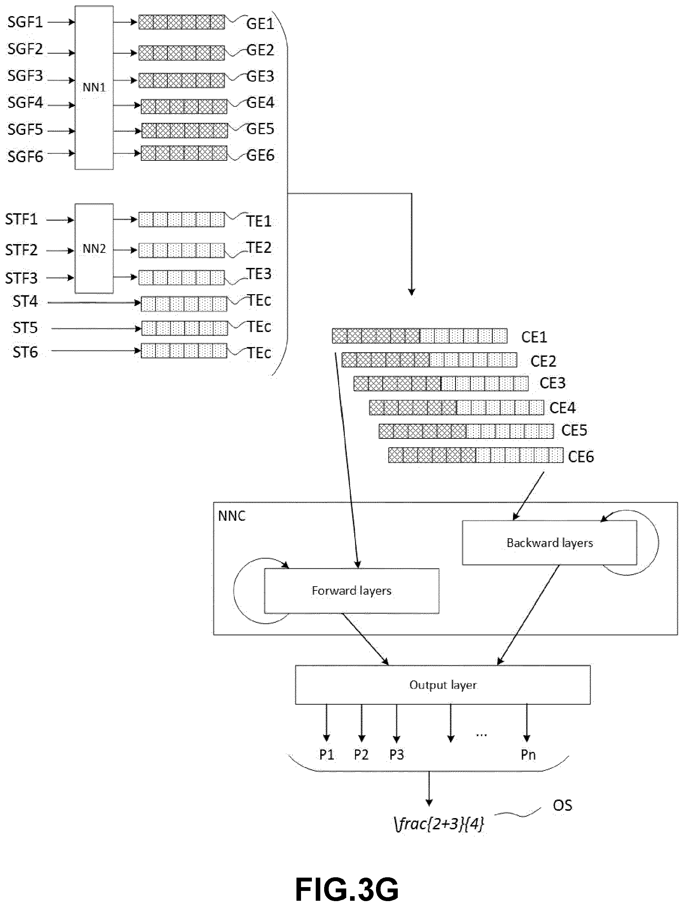

According to a particular embodiment, when running the applications 12 stored in the memory 7 (figure 1), the system for recognizing a mixed input-type sequence, wherein the mixed input-type sequence comprises a portion of typeset-input sequence and a portion of handwritten-input sequence, implemented by the computing device DV, is now described with reference to Figure 1 and further described in Figure 2 and Figure 3.

The computing device may comprise a module configured to perform a given step, namely: a sequence retrieving module 110, a typeset point selecting module 120, an ink point sampling module 130, a typeset feature extracting module 140, a geometric feature calculating module 150, a typeset embedding generating module 160, a geometric embedding generating module 170, a geometric and typeset embedding combining module 180, a symbol recognizing module 190.

The sequence retrieving module 110 is configured to retrieve a mixed input-type sequence comprising at least one typeset symbol and at least one handwritten stroke. The sequence retrieving module 110 comprises a typeset input retrieving module wherein the typeset symbol data includes at least one identified symbol rendered as typeset ink over an electronic document. The at least one typeset symbol presented over the electronic document may result from directly typing the symbol using a keyboard or a copy-paste function, or it may be the result of a recognition operation on a handwriting input.

The sequence retrieving module 110 comprises a handwriting input retrieving module wherein the handwritten stroke data includes at least one stroke. The handwriting input retrieving module includes one or more processing elements related to detection, management and treatment of user input. Strokes entered on or via the input surface 4 are processed by the processor 6 as digital ink. Users may enter a stroke with a finger or some instrument such as a pen or stylus suitable for use with the input surface. The user may also enter a stroke by making a gesture above the input surface 4 if technology that senses or images motion in the vicinity of 'the input surface 4 is being used, or with a peripheral device of the computing device DV, such as a mouse or joystick, or with a projected interface, e.g., image processing of a passive plane surface to determine the stroke and gesture signals.

A stroke is characterized by at least the stroke initiation location, the stroke termination location, and the path connecting the stroke initiation and termination locations. Further information such as timing, pressure, angle at a number of sample points along the path may also be captured to provide deeper detail of the strokes.

The received handwriting data corresponds to data generated by the touch-based user interface and associated circuitry in response to capture of the stroke applied by the user. Different touch-based user interfaces may capture the stroke differently, including using different input sampling techniques, different data representation techniques, etc. In an embodiment, where the data received from the touch-based user interface is of a different format than the ink point format used by the present invention, the received data is converted such as to generate a plurality of ink points.

The typeset point selecting module 120 is configured to select one or more typeset points for each typeset symbol. The one or more typeset symbol is represented by a geometrical location of the typeset symbol in a rectangular coordinate space defined by the user interface 4 with each typeset point being associated with $(X, Y)$ coordinate in the rectangular coordinate space. Therefore, each typeset point is defined by a position $(X, Y)$. In some embodiment, the typeset point selecting module is configured to associate a position $(X, Y)$ with an associated timestamp $(t)$ retrieved from the typeset retrieving module corresponding to a input time of the typeset symbol using the keyboard or the copy-paste function. Therefore, the typeset selecting module is configured to select at least one typeset point from a typeset ink path representation of a typeset symbol in the rectangular coordinate space.

In one embodiment, the typeset point selecting module is configured to select at least one typeset point from the typeset representation of a bounding shape of a typeset symbol, for example a bounding box of a typeset symbol. The bounding box of the typeset symbol is defined as the horizontal and the vertical extend of the typeset symbol. The at least one typeset point may be selected from any defined position from the bounding box. For example, one typeset point may be selected from one of the four corners of the bounding box to represent the geometrical location of the typeset symbol. In another example, two typeset points may be selected from opposite corners of the bounding box to represent the geometrical location of the typeset symbol.

In one embodiment, the typeset point selecting module is configured to select at least one typeset point from the center of gravity of the bounding box of the typeset symbol.

In one embodiment, the typeset point selecting module is configured to select at least one typeset point from the typeset representation of a path of a typeset symbol, wherein the path of the typeset symbol may be associated with basic shapes (e.g. a line segment, circle, ellipse, arc of circle, arc of ellipse, and point) to more complex type of shapes (e.g., sinusoidal, spline, Bezier, and parametric function plots).

The ink point sampling module 130 is configured to generate a plurality of ink points and a respective plurality of timestamps from the received data.

In another embodiment, the ink point sampling module may further include resample the plurality of ink points to generate a second plurality of ink points and an associated second plurality of timestamps. The resampling may be performed based on the original or the corrected timestamps. The second plurality of ink points and the second plurality of timestamps are then used for the remainder of process. Resampling the plurality of ink points is advantageous to ensure uniform performance across different devices. Indeed, as devices typically use different sampling techniques, the data received in step 110 may differ in terms of sampling characteristics between devices.

Different resampling techniques may be used: temporal, spatial, or both. In an embodiment, resampling according to a temporal frequency is used, resulting in the second plurality of timestamps being characterized by a fixed duration between consecutive timestamps.

In an embodiment, the resampling comprises interpolating the plurality of ink points and associated plurality of timestamps to generate the second plurality of ink points and the associated second plurality of timestamps.

The typeset feature extracting module 140 is configured to extract a set of typeset features from each typeset symbol of the at least one retrieved typeset symbol. The typeset features correspond to indexes of known symbols of an alphabet stored in a vector of symbols referred to as a dictionary. For each typeset symbol, the index corresponding to the known typeset symbol of the sequence is identified.

In another embodiment, the dictionary includes a virtual typeset symbol wherein the index corresponding to the virtual symbol may be assigned as a typeset feature extracted for each handwritten stroke of the at least one retrieved handwritten stroke. Therefore, any sample ink point of the retrieved handwritten stroke is associated with the virtual symbol.

The geometric features calculating module 150 is configured to calculate a set of geometric features per point of a segment wherein the segment is a typeset symbol, or a handwritten stroke and the points are respectively the selected typeset points of the at least one retrieved typeset symbols and the sampled ink points from the at least handwritten stroke.

The set of geometric features includes point features such as absolute and relative positions of a current point, angles, lengths and distances of the current point with any other reference points defined on the same segment or on another segment.

The point features of a point, wherein the point is an ink point or a typeset point, whether the typeset point is selected from the bounding box or the path of a typeset symbol are, for example:

- an absolute position of the point;

- an absolute distance "ds" between the point and the next point or the second next point of the stroke;

- projections "dx" and "dy" on the X and Y axes respectively of the distance "ds";

- an absolute distance "ds" between the ink point and the first ink point or the last ink point of the stroke;

- an absolute distance "ds" between the ink point and a center of gravity of the stroke (obtained by averaging the X and Y coordinates of the points in the stroke);

- a measure of the curvature at the point, by the values $\cos \theta$, $\sin \theta$, and $\theta$, where $\theta$ is the angle formed between the line connecting the point to the previous point and the line connecting the point to the next point.

The point features may describe geometric relationships between a point and any other point on the same segment and/or a center of gravity of the segment.

The point features may also describe geometric relationships between a point and the k closest neighbor points wherein a neighbor point is close according to an absolute distance between the points. The point and the neighbor point may belong to the same segment or may belong to different segments, wherein the different segments may be of a same input-type or of a different input-type. Therefore, the point features may describe geometric relationships between segments of different input-type.

The set of geometric features includes segment features wherein a segment is a typeset symbol or a handwritten stroke.

The segment features of a stroke or a typeset symbol are, for example:

- the overall path of the segment: for example, a length as a summation of consecutive point distances, or a curvature as an average of curvature computed from consecutive points, etc.;

- a count of singular points of a segment such as inflection points and/or crossing points, a crossing point being a point where the segment intersects itself;

- a count of maximum or minimum curvature points determined according to a maximum or a minimum curvature value within the segment;

- a ratio between the segment length and a distance between the first and last points of the segment.

The typeset embedding generating module 160 is configured to generate a typeset embedding per typeset symbol by applying the corresponding set of typeset features to a second neural network. The second neural network encodes a set of the typeset features into a second embedding of a second fixed size.

In another embodiment, the typeset embedding generating module 160 is configured to generate a typeset embedding per handwritten stroke by applying the corresponding set of typeset features to the second neural network, wherein the set of typeset features for a handwritten stroke is generated through the occurrence of the virtual symbol of the dictionary as explained above.

The geometric embedding generating module 170 is configured to generate a geometric embedding per segment, either a typeset symbol or a handwritten stroke, by applying the corresponding set of geometric features to a first neural network, wherein the number of features per set depends on the number of points of the segment. The first neural network encodes a set of geometric features into a first embedding of a first fixed size.

The geometric and typeset embeddings combining module 180 is configured to combine a geometric embedding of one segment with the corresponding typeset embedding of the same segment. When the segment is a typeset symbol, the typeset embedding is generated by the typeset embedding generating module 170.

In one embodiment, when the segment is a handwritten stroke, the typeset embedding is generated by the typeset embedding generating module 170.

In another embodiment, when the segment is a handwritten stroke, the typeset embedding is set as a constant embedding of the second fixed size. In one example, the constant embedding may be set to zero. In another example, the constant embedding may be generated by assigning an index of a constant virtual typeset symbol to the handwritten stroke segments resulting in the extracting of a set of typeset features; applying the resulting set of typeset features to the second neural network; generating the constant typeset embedding for each handwritten stroke segment.

In one embodiment, combining the corresponding geometric and typeset embeddings may be a concatenation of both embeddings.

In another embodiment, combining the corresponding geometric and typeset embeddings may be an operation such as an addition, a subtraction, or a multiplication of both embeddings.

The symbol recognizing module 190 is configured to generate a sequence of recognized symbols by applying the combined embeddings to a neural network-based sequence classifier. The neural network-based sequence classifier may be a RNN, a CNN, or a transformer encoder, for example. The RNN may have a standard RNN architecture or a particular RNN architecture, such as a Long Short-Term Memory (LSTM) or a Gated Recurrent Unit (GRU) RNN architecture. Recurrent neural networks (RNNs) are a connectionist model containing self-connected hidden layers. One benefit of the recurrent connection is that a 'memory' of previous inputs remains in the network's internal state, allowing it to make use of past context, thereby allowing higher performances of the handwriting recognition.

The neural network-based sequence classifier may be implemented as a recurrent Bidirectional Long Short-Term Memory (BLSTM). The use of a recurrent BLSTM neural network means that the network includes memory blocks which enable it to learn long-term dependencies and to remember information over time. This type of network permits the sequence classifier to handle a sequence of vectors (an entire stroke) and to account for the temporal dependencies between successive sub-strokes (i.e., to remember the details of the path of the stroke).

In accordance with a particular embodiment of the present invention, a method for recognizing a mixed input-type sequence, wherein the mixed input-type sequence comprises a portion of typeset-input sequence and a portion of handwritten-input sequence, implemented by the computing device DV, is now described with reference to Figure 1. More specifically, the computing device implements this method by executing the application 12 stored in the memory 7.

The above description of each module of the computing device represented in Figure 1 may apply in an analogous manner to each corresponding step of the method as shown in figure 2 and further described in figure 3.

In a mixed input-type sequence retrieving step S110, the computing device is retrieving the at least one typeset symbol and the at least one handwritten stroke.

The at least one typeset symbol is a sequence of one or more typeset symbols introduced over an electronic document, directly in typeset format as typed content (e.g. using a keyboard or a copy-paste function) or it may be the result of a recognition operation on a handwriting input. A typeset symbol bound or extend is a symbol bounding box defined by a symbol height and a symbol width determined by the data retrieving module 110.

The at least one handwritten stroke is detected by the retrieving module 110 and rendered as digital ink on the display 5 (or other display) as the input is received.

The retrieved handwritten input represents at least one stroke applied by the user and comprises a plurality of ink points and a plurality of timestamps associated respectively with the plurality of ink points. The plurality of ink points are localized in a rectangular coordinate space (defined based on a screen of the touch-based user interface) with each ink point being associated with (X,Y) coordinates in the rectangular coordinate space. Therefore, each ink point is defined by a position (X,Y) and an associated timestamp (t).

In an embodiment, the received handwritten data corresponds to data generated by the touch-based user interface and associated circuitry in response to capture of the stroke applied by the user. Different touch-based user interfaces may capture the stroke differently, including using different input sampling techniques, different data representation techniques, etc. In an embodiment, where the data received from the touch-based user interface is of a different format than the ink point format used by the present invention, the received data is converted such as to generate a plurality of ink points and a respective plurality of timestamps therefrom.

In an ink point sampling step S120, the computing device is sampling a plurality of ink points and a respective plurality of timestamps from the received handwritten data.

Correction of the plurality of timestamps is advantageous to remove artifacts related to device capture and to improve recognition. Indeed, due to device capture issues, it is common that certain timestamps do not correspond to the exact instants at which their respective ink points are drawn. For example, in certain devices, the timestamps assigned to ink points correspond to the time at which an event log containing the ink points is sent to a processor unit, not the precise instants at which the ink points are captured. As such, different successive ink points can have the same timestamp value in the received data. Correction of the plurality of timestamps ensures that the timestamps better reflect the exact instants at which the respective ink points are drawn by the user. Improved gesture recognition is thereby achieved.

In an embodiment, the correction of the plurality of timestamps is done by using a function that approximates an original timestamp curve of the plurality of ink points. The approximating function may be a linear function, though embodiments are not limited as such.

In a typeset point selecting step S130, the computing device is selecting one or more typeset points for each symbol of the sequence of typeset symbols.

In one embodiment, the one or more typeset points of a symbol is selected from the bounding box of the typeset symbol. The one or more typeset points may be defined as opposite edges of the bounding box. For example, the selected typeset points of a symbol may be defined as the coordinates of the top left corner and the bottom right corner of the bounding box of the symbol. In another example, the selected typeset points of the symbol may be defined as one defined position on the bounding box. In another example, the selected typeset points may be defined as geometrical construct of the bounding box, such as the center of geometry of the bounding box. The typeset points are localized in a rectangular coordinate space (defined based on a screen of the touch-based user interface) with each typeset point being associated with (X,Y) coordinates in the rectangular coordinate space. Each typeset point defined by a position (X,Y) may be associated with a timestamp (t) corresponding to a time of entering the typeset symbol using the keyboard or the copy-paste function. A sequence of the selected typeset points may be defined as consecutive typeset points along one axes of the rectangular coordinate space.

In another embodiment, the one or more typeset points of a typeset symbol is selected from a typeset ink trace of the symbol. The one or more typeset of a symbol may be defined as a plurality of points taken from the trace of the typeset. For example, the plurality of points may be generated by spatial sampling of points along the typeset ink trace of the symbol, may be associated with a timestamp (t) and selected as typeset points.

In a set of geometric features calculating step S140, the computing device is calculating a set of geometric features per points of a segment wherein the segment is a typeset symbol or a handwritten stroke and the points are respectively the selected typeset points of the symbol or the sampled ink points of the stroke.

The set of geometric features includes point features such as absolute and relative positions of a current point, angles, lengths and distances of the current point with any other reference points defined on the same segment or on another segment. Therefore, the set of geometric features may include distances between two consecutive segments wherein one segment is a stroke, and the other segment is a symbol.

The set of geometric features may describe, for example, geometric relationships between a (current) point and any other reference point of the segment, which relationships may be represented by; the absolute distance "ds" between the current point and the reference point; the projections "dx" and "dy" on the X and Y axes respectively of the distance "ds".

Any other point of the segment may be the reference point, for example, the first point of the segment, a center of gravity of the segment (obtained by averaging the X and Y coordinates of the points in the segment) or the previous point.

The set of geometric features may include a measure of the curvature at the current point, by the values $\cos \theta$, $\sin \theta$, and $\theta$, where $\theta$ is the angle formed between the line connecting the reference point to the previous point and the line connecting the current point to the next point.

The set of geometric features may include, for example, global geometric segment features based on the overall path of the segment being the stroke or the symbol (e.g., length as a summation of consecutive ink point distances, curvature as an average of curvature computed from consecutive ink points, etc.).

In another embodiment, generating the set of geometric features for a segment such as a stroke or a symbol comprises computing one or more of: a stroke or symbol length, a count of singular points (such as inflection points and/or crossing points (a crossing point being a point where the stroke intersects itself)), and a count of maximum or minimum curvature points determined according to a maximum or a minimum curvature value within the segment. In some embodiments, generating the segment geometric features may comprise computing of a ratio between the segment length and a distance between its first and last points of the segment.

In another embodiment, the plurality of typeset points of the symbol may be selected from or the bounding box of the symbol. Therefore, the set of geometric features for the typeset symbol describe geometric relationships between a current typeset point of the bounding box of the symbol and any other reference point, for example, a defined typeset point of the bounding box of the symbol and/or a center of gravity of the bounding box of the symbol.

In a geometric embedding generating step S150, the computing device is generating geometric embeddings by applying the geometric features to a first neural network. The first neural network is a down-sampling process generating an abstraction of the variable length segments by encoding the sets of geometric features of one segment into fixed-length embeddings of a first fixed size. The first neural network captures local information of the segments such as the shape, size or curvature. The first neural network may be a fully convolutional neural network (FCNN) or a recurrent neural network (RNN). The RNN may have a standard RNN architecture or a particular RNN architecture, such as a Long Short Term Memory (LSTM) or a Gated Recurrent Unit (GRU) RNN architecture.

In a set of typeset features extracting step S160, the computing device is extracting a set of typeset features from each typeset symbol of the sequence of symbols, wherein the typeset features include indexes of a fixed size vector of symbols, referred to as a dictionary, used to store characters and symbols of an alphabet, for example the Latin alphabet. The set of typeset features includes an index used for retrieving the corresponding typeset symbol of the language. Additionally, the set of typeset features may include information about the symbol bounding box sizes and symbol positions.

In a typeset embedding generating step S170, the computing device is generating typeset embeddings by applying the typeset features to a second neural network The second neural network is a down-sampling process generating a fixed-length embeddings of a second fixed-length. The second neural network may be any feedforward neural network approach, convolutional neural network (CNN) approach, or recurrent neural network (RNN) approach. MLP-based neural networks are known in the art. For the purpose of presentation only, and not limitation, the MLP approach is briefly described herein. The MLP approach is based on an architecture that consists of three or more layers (an input and an output layer with one or more hidden layers) of nonlinearly-activating nodes. Since MLPs are fully connected, each node in one layer connects with a certain weight to every other node in the following layer. Learning or training occurs in the MLP by changing connection weights after each input is processed, based on the amount of error in the output compared to the expected result. This is an example of supervised learning, and is carried out through back-propagation.

In a typeset and geometric embedding combining step S180, the computing device is combining the generated typeset embeddings with the generated geometric embeddings to generate a combined embedding. In one example, the combining process may be a concatenation of the typeset embeddings and the geometric embeddings. In other examples, the combining process may be an addition, a multiplication of the typeset embeddings and the ink embeddings.

In a combined embeddings applying step S190, the computing device is applying the combined embeddings to a neural network. The neural network is an encoder-decoder composed of multiple hidden layers and a last decoder layer.

In mixed-input type sequence recognizing step S200, the neural network is trained to predict a sequence of recognized symbols from the mixed input-type sequence represented as the fixed latent space of the combined embeddings.

Figure 3A shows an example of a mixed input-type sequence MIS of six segments. Three of the segments correspond to three typeset symbols SY1, SY2 and SY3, respectively, representing a sequence of symbols "2 + 3" and the other three segments correspond to three handwritten strokes ST4, ST5 and ST6, respectively, representing a handwritten fraction bar over a handwritten symbol " $\overline{\phantom{4}}\atop 4$ ". The strokes ST5 and ST6 correspond to the handwritten symbol "4". As it may be apparent, a segment may be either a typeset symbol or a handwritten stroke. The typeset sequence of symbols SY1, SY2 and SY3 together with the plurality of handwritten strokes ST4, ST5 and ST6 represents a mathematical equation EQ of the fraction " $\dfrac{2 + 3}{4}$ ". In the present example, the math content is multiple baselined. It should be considered however numerous other types, content and form of input-type sequences being possible, in terms of language, style, format, etc. In particular, various spatial arrangements of the typeset symbols and the strokes relative to each other.

It is assumed in the present case that the plurality of strokes ST of digital ink is input by a user in an input area of the display 5 using the input surface 4 of the computing device DV. A user may enter an input stroke SK with a hand or finger, or with some input instrument such as a digital pen or stylus suitable for use with the input surface 4. The user may also enter an input stroke SK by making a gesture above the input surface 4 if means configured to sense motions in the vicinity of the input surface 4 is being used, or with a peripheral device of the computing device DV, such as a mouse or a joystick or the like.

It should be understood that the computing device DV may however acquire handwriting IN in any other appropriate manner.

In one example, the computing device DV acquires the strokes SK as they are input by the user with the input surface 4 to perform on-line handwriting recognition. The computing device DV1 detects and processes handwriting (text and math content) at a line level, although various implementations are possible. As described further below, temporal information characterizing how the strokes SK are input relative to each other over time is thus acquired by the computing device DV1 for later processing.

In another example, the present invention may apply in an analogous manner to offline handwriting recognition, i.e. by performing the concept of the invention on an image of handwriting which thus forms a static representation of handwriting. Temporal information regarding how the strokes are input relative to each other over time is thus not directly available. The concept of the invention may thus be applied without using such temporal information or, alternatively, by recovering the strokes from the image and generating temporal information in any appropriate artificial way, e.g. by training a neural network using handwritten images and their known temporal information.

Figure 3B shows the three typeset symbols SY1, SY2 and SY3 with associated typeset points P1 to P6, and the three strokes ST4, ST5 and ST6 with associated ink points P7 to P21. The three typeset symbols are included in three bounding boxes bb1, bb2 and bb3 representing the symbol bounds or extends. In this example, two typeset points per bounding box are selected corresponding to the upper left corners P1, P3 and P5, and the lower right corners P2, P4 and P6 of the bounding boxes of the symbols SY1, SY2 and SY3 respectively. Each typeset point is defined by a position (X, Y) and an associated timestamp (t) corresponding to an input time of the typeset symbols using a keyboard.

Further, Figure 3B shows thirteen sampled ink points P7 to P21 wherein each ink point is an example sampled ink point defined by a position (X, Y) and an associated timestamp (t) according to a temporal frequency, the sampling of the plurality of ink points is based on temporal information (i.e., into equal duration segments) corresponding to splitting the stroke into a plurality of sub-strokes have an equal number of inks points (with same durations but potentially with different lengths). Each retrieved handwritten stroke ST4, ST5 and ST6 is sampled according to a temporal frequency resulting in ink points IP1 to IP21 with a fixed duration between consecutive timestamps.

Figure 3C shows the points of the segments of Figure 3B including the six selected typeset points P1 to P6 over the three bounding boxes bb1, bb2 and bb3 of the three typeset symbols and the fifteen sampled ink points P7 to P21 of the three handwritten strokes of Figure 3B. The shown typeset points and ink points are used to calculate geometric features of the six segments wherein a set of geometric features is calculated per typeset symbol and per ink stroke, as further illustrated by Figure 3D.

Figure 3D shows the twenty-one points of the six segments of Figure 3B and some examples of the geometric features calculated for the first segment SY1 of the mixed input-type sequence MIS. For example, as illustrated in Figure 3D, the geometric features of P1 and P2 may include, for example: the absolute position AB1 (x1, y1) of P1 and the absolute position AB2 (x2, y2) of P2. The geometric features of SY1 may include geometric features between the current point and three closest points, for example: the geometric features may be defined between P1 and the first closest points P2, P9 and P3 and between P2 and three closest points P9, P10 and P3 wherein the geometric features of P1 include the absolute distances AD11, AD12 and AD13 represented as d1, d2 and d3 on Figure 3D, and the geometric features of P2 include the absolute distances AD21, AD22 and AD23 represented as d4, d5 and d6 on Figure 3D.

Figure 3E shows a representation of the sets of geometric features SGF1, SGF2 SGF4, SGF5 and SGF6 including example point features AB$i$ and geometric features AD$ij$ calculated for the typeset symbols SY1, SY2 and SY3 and for the handwritten strokes ST4, ST5 and ST6, respectively.

Figure 3F illustrates the extraction of the sets of typeset features STF1, STF2 STF3 from the known typeset symbols SY1, SY2 and SY3. A set of typeset features is a vector of indexes, referred to as the dictionary, representing all possible symbols (shown as first rows of tables STF1, STF2 and STF3) the of an alphabet from a setup of the device. The first, second and third sets of features STF1, STF2 and STF3 of the first, second and third typeset symbols SY1, SY2 and SY3 are respectively set as an index "1" indicating the occurrence of the respective known symbol.

Figure 3G shows the generation of six geometric embeddings GE1, GE2, GE3, GE4, GE5 and GE6 from applying the six sets of geometric features SGF1, SGF2 SGF4, SGF5 and SGF6 of Figure 3E to a first neural network NN1. The first neural network NN1 is processing the sets of geometric features SGF1, SGF2 SGF4, SGF5 and SGF6 by encoding them into fixed length embeddings GE1, GE2, GE3, GE4, GE5 and GE6. The six fixed length embeddings GE1, GE2, GE3, GE4, GE5 and GE6 are capturing local information of shapes, size or curvature of the six segments of Figure 3A.

Further, Figure 3G shows the generation of three typeset embeddings TE1, TE2 and TE3 from applying the three sets of typeset features STF1, STF2 and STF3 of Figure 3F to a second neural network NN2. The second neural network NN2 is processing the sets of typeset features STF1, STF2 and STF3 by down-sampling them into fixed length embeddings TE1, TE2 and TE3 respectively. Additionally, the three strokes ST4, ST5 and ST6 are associated with a constant embedding TEc.

In one example, the constant embedding TEc is set to zero. In another example, the constant embedding TEc is generated from assigning to the three strokes a constant virtual symbol which allows the system to extract a constant typeset embedding to any handwritten stroke segment, including ST4, ST5 and ST6.

Figure 3G shows six combinations CE1, CE2, CE3, CE4, CE5 and CE6 corresponding to the six segments of the mixed input-type sequence MIS. The three typeset symbols SY1, SY2 and SY3 are associated with the combinations of the three generated geometric embeddings GE1, GE2, GE3 to the three typeset embeddings TE1, TE2 and TE3. The three handwritten strokes ST4, ST5 and ST6 are associated with the combinations of the three generated geometric embeddings GE4, GE5 and GE6 to the three instances of a constant embedding Tec. The combinations of the geometric embeddings to the typeset embeddings or to the constant embedding are, for example, concatenations of the associated embeddings.

Finally, as shown in Figure 3G, the combined embeddings CE1, CE2, CE3, CE4, CE5 and CE6 are applied to a neural network- based classifier NNC as a sequence of inputs representing the segments of the mixed input-type sequence. The neural network-based classifier NNC was trained to recognize a sequence of known symbols from the generated combined embeddings. The NNC may include a recurrent bi-directional long short term memory neural network including backward layers and forward layers within the skill and knowledge of a person skilled in the art and will not be described herein. Detailed description of the functions that may be used for backward layers and forward layers can be found in "Graves, A & Schmidhuber, J. (2005), Framewise phoneme classification with bidirectional LSTM and other neural network architectures, Neural networks, 18(5-6), 602-610"; "S. Hochreiter and J. Schmidhuber, Long Short-Term Memory, NC, 9(8): 1735-1780, 1997," and "F. Gers, N. Schraudolph, and J. Schmidhuber, Learning precise timing with LSTM recurrent networks, Journal of Machine Learning Research, 3:115-143, 2002. In the context of symbol recognition, this network permits the segment classifier to handle a sequence of vectors (an entire segment) and to account for the temporal dependencies between successive segments.

As described above, each combined embedding CE1, CE2, CE3, CE4, CE5 and CE6, representing each segment SY1, SY2, SY3, ST4, ST5 and ST6 respectively, is fed into the neural network NNC both forwards and backwards by virtue of the bi-directionality of network. An Output layer receives the outputs of backward layers and forward layers and generates a set of probabilities P1 to Pn for each segment of the mixed input-type sequence MIS of being a symbol or part of a symbol of the dictionary allowing an output sequence of symbols OS to be recognized. The recognized sequence OS is shown, in FIG 3G, as a sequence of mathematical terms of the LaTex math mode for coding mathematical formulas such as "\frac{2+3}{4}".

## Claims

1. A method for recognizing a mixed input-type sequence, wherein the mixed input-type sequence includes at least a typeset symbol and at least a handwritten stroke, the method comprising:

   - retrieving (S110) the at least one typeset symbol and the at least one handwritten stroke;
   - extracting (S140) a set of typeset features for the at least one retrieved typeset symbol;
   - calculating (S150) a first set of geometric features for the at least one retrieved typeset symbol and a second set of geometric features for the at least one retrieved handwritten stroke;
   - generating (S160) a typeset embedding from the extracted set of typeset features, and assigning a typeset embedding for the at least one retrieved handwritten stroke;
   - generating (S170) geometric embeddings from the calculated sets of geometric features;
   - combining (S180) the generated typeset embedding of the at least one typeset symbol and the assigned typeset embedding of the at least one handwritten stroke with the respective geometric embeddings;
   - applying (S190) the combined embeddings as an input sequence representing the mixed input-type sequence to a trained neural network;
   - generating (S200) a sequence of recognized symbols.

2. The method of claim 1 comprising,

   - selecting S120 at least one typeset point for each retrieved typeset symbol, wherein the set of geometric features for each retrieved typeset symbol includes calculating features of the at least one selected typeset point.

3. The method of claim 2, wherein the at least one typeset point is selected from a bounding box of the retrieved typeset symbol.

4. The method of claim 1 comprising,

   - sampling S130 at least one ink point for each retrieved handwritten stroke, wherein the set of geometric features for each retrieved handwritten stroke includes calculating features of the at least one sampled ink point.

5. The method of claim 4, wherein the set of the geometric features includes calculating geometric relationships between the at least one sampled ink point of the handwritten stroke and the at least one typeset point of the typeset symbol.

6. The method of claims 1 to 5, wherein the set of the typeset features includes an index of a fixed size dictionary.

7. The method of claims 1 to 6, wherein the assigned typeset embedding is a constant.

8. The method of claim 7, wherein the constant typeset embedding is generated by:

   - assigning an index of a constant virtual typeset symbol of the fixed size dictionary, resulting in the extracting of a set of typeset features for the at least one retrieved handwritten stroke;
   - applying the extracted set of typeset features to the second neural network;
   - generating the constant typeset embedding.

9. The method of claims 1 to 8, wherein the combining of the typeset embeddings with the respective geometric embeddings includes concatenating the typeset embeddings with the respective geometric embeddings.

10. The method of claims 1 to 9, comprising training the neural network for recognizing symbols of the fixed size dictionary from a training set of mixed input-type sequences.

11. A computing device configured to recognize a mixed input-type sequence, wherein the mixed input-type sequence comprises at least a typeset symbol and at least a handwritten stroke, comprising:

   - a sequence retrieving module 110 configured to retrieve the at least one typeset symbol and the at least one handwritten stroke;
   - a typeset feature extracting module 140 configured to extract a set of typeset features for the at least one retrieved typeset symbol;
   - a geometric feature calculating module 150 configured to calculate a first set of geometric features for the at least one retrieved typeset symbol and a second set of geometric features for the at least one retrieved handwritten stroke;
   - a typeset embedding generating module 160 configured to generate a typeset embedding from the extracted set of typeset features and assigning a typeset embedding for the at least one retrieved handwritten stroke;
   - a geometric embedding generating module 170 configured to generate geometric embeddings from the calculated sets of geometric features;
   - a geometric and typeset combining module 180 configured to combine the generated typeset embedding of the at least one typeset symbol and the assigned typeset embedding of the at least one handwritten stroke with the respective geometric embeddings; and
   - a symbol recognizing module 190 comprising a neural network trained to recognize symbols from an input sequence of combined embeddings.

12. The computing device of claim 11, comprising:

   - a typeset point selecting module 120 configured to select at least one typeset point for each retrieved typeset symbol; and
   - an ink point sampling module 130 configured to sample at least one ink point for each retrieved handwritten stroke.

13. The computing device of claim 12, comprising:

   - an input surface (4) configured to receive handwritten input comprising a sequence of ink points of the handwritten stroke in a rectangular coordinate space.

14. The computing device of claim 11 to 13, comprising:

   a processor (6); and
   memory (7) storing instructions that, when executed by the processor (6), configure the processor (7) to perform a method according to any one of claims 1-10.

15. A computer program including instructions that when executed by a processor (6) cause the processor to execute a method according to any one of claims 1 to 10.

DV

UI

| Display 5 | Input Interface 4 |

Processor 6

Memory 7

| Operating System 8 | Application 12 |

Sequence retrieving module 110

Typeset point selecting module 120

Ink point sampling module 130

Typeset feature extracting module 140

Geometric feature calculating module 150

Typeset embedding generating module 160

Geometric embedding generating module 170

Geometric and typeset embedding combining module 180

Symbol recognizing module 190

SV

# FIG.1

Retrieving typeset data and handwritten data —⁓ S110

Selecting typeset points from the typeset input ⌒ S120

Sampling ink points from the handwritten input ⌒ S130

Extracting typeset features ⌒ S140

Calculating geometric features ⌒ S150

Generating typeset embeddings ⌒ S160

Generating geometric embeddings ⌒ S170

Combining typeset embeddings and ink embeddings ⌒ S180

Applying the combined embeddings to Neural Network ⌒ S190

Generating a sequence of symbols ⌒ S200

# FIG.2

MIS

SY1  SY2  SY3

2+3

ST4

4

ST5        ST6

**FIG.3A**

bb2

bb3

P1      P3    P5

bb1

2+3

P6

P2

P7    P15      P14

P19

P4

P21

**FIG.3B**

bb2

P3      P5

P1

bb1

P2        P6

P7    P16    P4  P15

P21

**FIG.3C**

FIG.3D

**SGF1**

| AB1 | AD11 | AD12 | AD13 | AB2 | AD21 | AD22 | AD23 | ... |
|-----|------|------|------|-----|------|------|------|-----|
| x1 | y1 | d1 | d2 | d3 | x2 | y2 | d4 | d5 | d6 | ... |

**SGF2**

| AB3 | AD31 | AD32 | AD33 | AB4 | AD41 | AD42 | AD43 | ... |
|-----|------|------|------|-----|------|------|------|-----|
| x3 | y3 | d7 | d8 | d9 | x4 | y4 | d10 | | | ... |

**SGF3**

| AB5 | AD51 | AD52 | AD53 | AB6 | AD61 | AD62 | AD63 | ... |
|-----|------|------|------|-----|------|------|------|-----|
| | | | | | | | | ... |

**SGF4**

| AB7 | AD71 | AD72 | AD73 | AB8 | AD81 | AD82 | AD83 | AB9 | | | AB10 | | | ... |
|-----|------|------|------|-----|------|------|------|-----|--|--|------|--|--|-----|
| x7 | y7 | | | x8 | y8 | | | | | | | | | ... |

**SGF5**

| AB16 | | | AB17 | | | AB18 | | | AB19 | | | ... |
|------|--|--|------|--|--|------|--|--|------|--|--|-----|
| | | | | | | | | | | | | ... |

**SGF6**

| AB20 | | | AB21 | | | ... |
|------|--|--|------|--|--|-----|
| | | | | | | ... |

FIG.3E

**FIG.3F**

SGF1 → NN1 → GE1
SGF2 → NN1 → GE2
SGF3 → NN1 → GE3
SGF4 → NN1 → GE4
SGF5 → NN1 → GE5
SGF6 → NN1 → GE6

STF1 → NN2 → TE1
STF2 → NN2 → TE2
STF3 → NN2 → TE3
ST4 → TEc
ST5 → TEc
ST6 → TEc

CE1
CE2
CE3
CE4
CE5
CE6

NNC

Backward layers

Forward layers

Output layer

P1  P2  P3  ...  Pn

$\frac{2+3}{4}$  OS

**FIG.3G**

Europäisches
Patentamt

European
Patent Office

Office européen
des brevets

# EUROPEAN SEARCH REPORT

**Application Number**

EP 23 30 7198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/084641 A1 (ROY UDIT [FR] ET AL) 16 March 2023 (2023-03-16) * paragraph [0077] – paragraph [0280]; figures 1-18 * | 1-15 | INV.<br>G06V30/32 |
| A | WO 2017/148834 A1 (MYSCRIPT [FR]) 8 September 2017 (2017-09-08) * paragraph [0045] – paragraph [0157]; figures 1-7 * | 1-15 | |

**TECHNICAL FIELDS SEARCHED (IPC)**

G06V

The present search report has been drawn up for all claims

| Place of search | Date of completion of the search | Examiner |
|---|---|---|
| The Hague | 27 March 2024 | Thibault, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 7198

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2024

| Patent document cited in search report | Publication date | Patent family member(s) | Publication date |
|---|---|---|---|
| US 2023084641 A1 | 16-03-2023 | CN 115039144 A | 09-09-2022 |
| | | EP 3859602 A1 | 04-08-2021 |
| | | EP 4097630 A1 | 07-12-2022 |
| | | JP 2023510904 A | 15-03-2023 |
| | | KR 20220132536 A | 30-09-2022 |
| | | US 2023084641 A1 | 16-03-2023 |
| | | WO 2021151929 A1 | 05-08-2021 |
| WO 2017148834 A1 | 08-09-2017 | CN 109074224 A | 21-12-2018 |
| | | EP 3423929 A1 | 09-01-2019 |
| | | JP 6902234 B2 | 14-07-2021 |
| | | JP 2019514097 A | 30-05-2019 |
| | | KR 20180119647 A | 02-11-2018 |
| | | US 2017249293 A1 | 31-08-2017 |
| | | WO 2017148834 A1 | 08-09-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SUTSKEVER I** ; **VINYALS O.** ; **LE Q. V.** Sequence to Sequence Learning with Neural Networks. *In Advances in Neural Information Processing Systems*, 2014
- **GRAVES, A** ; **SCHMIDHUBER, J.** Framewise phoneme classification with bidirectional LSTM and other neural network architectures. *Neural networks*, 2005, vol. 18 (5-6), 602-610

- **S. HOCHREITER** ; **J. SCHMIDHUBER**. *Long Short-Term Memory, NC*, 1997, vol. 9 (8), 1735-1780
- **F. GERS** ; **N. SCHRAUDOLPH** ; **J. SCHMIDHUBER**. Learning precise timing with LSTM recurrent networks. *Journal of Machine Learning Research*, 2002, vol. 3, 115-143